(19) Europäisches Patentamt / European Patent Office / Office européen des brevets

(11) **EP 1 842 281 B1**

(12) **EUROPÄISCHE PATENTSCHRIFT**

(45) Veröffentlichungstag und Bekanntmachung des Hinweises auf die Patenterteilung:
**13.07.2016  Patentblatt 2016/28**

(21) Anmeldenummer: **05740409.7**

(22) Anmeldetag: **24.05.2005**

(51) Int Cl.:
*H02M 3/158* (2006.01)    *H02M 7/5387* (2007.01)
*H02M 1/12* (2006.01)

(86) Internationale Anmeldenummer:
**PCT/CH2005/000293**

(87) Internationale Veröffentlichungsnummer:
**WO 2006/079226 (03.08.2006 Gazette 2006/31)**

(54) **VERFAHREN UND VORICHTUNG ZUM BETRIEB EINER UMRICHTERSCHALTUNG MIT EINEM LCL-FILTER**

METHOD AND DEVICE FOR THE OPERATION OF A CONVERTER CIRCUIT COMPRISING AN LCL FILTER

PROCEDE ET DISPOSITIF POUR  ACTIONNER UN CIRCUIT CONVERTISSEUR COMPORTANT UN FILTRE LCL

(84) Benannte Vertragsstaaten:
**CH DE FR GB LI**

(30) Priorität: **25.01.2005  US 646544 P**

(43) Veröffentlichungstag der Anmeldung:
**10.10.2007  Patentblatt 2007/41**

(73) Patentinhaber: **ABB Schweiz AG**
**5400 Baden (CH)**

(72) Erfinder:
• PONNALURI, Srinivas
  **CH-5417 Untersiggenthal (CH)**
• STEINKE, Jürgen
  **79774 Albbruck (DE)**

(74) Vertreter: **ABB Patent Attorneys**
**c/o ABB Schweiz AG**
**Intellectual Property CH-IP**
**Brown Boveri Strasse 6**
**5400 Baden (CH)**

(56) Entgegenhaltungen:
DE-A1- 4 115 010    US-A1- 2001 048 604

• BOJRUP M ET AL: "A MULTIPLE ROTATING INTEGRATOR CONTROLLER FOR ACTIVE FILTERS" 8TH EUROPEAN CONFERENCE ON POWER ELECTRONICS AND APPLICATIONS. LAUSANNE, CH, SEPT. 7 - 9, 1999, EPE . EUROPEAN CONFERENCE ON POWER ELECTRONICS AND APPLICATIONS, BRUSSLS : EPE ASSOCIATION, BE, Bd. CONF. 8, 7. September 1999 (1999-09-07), Seiten 1-9, XP000878439 ISBN: 90-75815-04-2
• BOJRUP M ET AL: "A dual purpose battery charger for electric vehicles" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, Bd. 1, 17. Mai 1998 (1998-05-17), Seiten 565-570, XP010294935 ISBN: 0-7803-4489-8
• LEE S J ET AL: "A harmonic reference frame based current controller for active filter" APPLIED POWER ELECTRONICS CONFERENCE AND EXPOSITION, 2000. APEC 2000. FIFTEENTH ANNUAL IEEE NEW ORLEANS, LA, USA 6-10 FEB. 2000, PISCATAWAY, NJ, USA,IEEE, US, Bd. 2, 6. Februar 2000 (2000-02-06), Seiten 1073-1078, XP010371636 ISBN: 0-7803-5864-3

- TEODORESCU R ET AL: "A stable three-phase LCL-filter based active rectifier without damping" CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003, CONFERENCE RECORD OF THE IEEE INDUSTRY APPLICATIONS CONFERENCE. IAS ANNUAL MEETING, NEW YORK, NY : IEEE, US, Bd. VOL. 3 OF 3. CONF. 38, 12. Oktober 2003 (2003-10-12), Seiten 1552-1557, XP010676201 ISBN: 0-7803-7883-0

- MACKEN K J P ET AL: "Distributed control of renewable generation units with integrated active filter" PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003, ANNUAL POWER ELECTRONICS SPECIALISTS CONFERENCE, NEW YORK, NY : IEEE, US, Bd. VOL. 4 OF 4. CONF. 34, 15. Juni 2003 (2003-06-15), Seiten 741-747, XP010648902 ISBN: 0-7803-7754-0

**Beschreibung**

**Technisches Gebiet**

Die Erfindung bezieht sich auf das Gebiet der Leistungselektronik. Sie geht aus von einem Verfahren zum Berieb einer Umrichterschaltung sowie Vorrichtung zur Durchführung des Verfahrens gemäss dem Oberbegriff der unabhängigen Ansprüche.

**Stand der Technik**

Herkömmliche Umrichterschaltungen umfassen eine Umrichtereinheit mit einer Vielzahl an ansteuerbaren Leistungshalbleiterschaltern, welche in bekannter Weise zur Schaltung von mindestens zwei Schaltspannungsniveaus verschaltet sind. An jedem Phasenanschluss der Umrichtereinheit ist ein LCL-Filter angeschlossen. Mit der Umrichtereinheit ist ferner ein kapazitiver Energiespeicher verbunden, welcher gängigerweise durch einen oder mehrere Kondensatoren gebildet ist. Für den Betrieb der Umrichterschaltung ist eine Vorrichtung vorgesehen, welche eine Regelungseinrichtung zur Erzeugung von Referenzspannungen aufweist, die über eine Ansteuerschaltung zur Bildung eines Ansteuersignals aus den Referenzspannungen mit den ansteuerbaren Leistungshalbleiterschaltern verbunden ist. Mittels des Ansteuersighals werden somit die Leistungshalbleiterschalter angesteuert.

Problematisch bei einer vorstehend genannten Umrichterschaltung ist, dass die LCL-Filter eine dauerhafte Verzerrung, d.h. unerwünschte Schwingungen, in den Filterausgangsströmen und Filterausgangsspannungen aufgrund von resonanten Schwingungen der LCL-Filter verursachen können. In einem typischerweise an die Filterausgänge angeschlossenen elektrischen Wechselspannungsnetz oder bei einer an die Filterausgänge angeschlossenen elektrischen Last können solche Verzerrungen zu Beschädigungen oder gar Zerstörungen führen und sind damit in höchstem Masse unerwünscht.

US 2001/0048604 A1 offenbart eine Umrichterschaltung mit angeschlossenem LCL-Filter.

**Darstellung der Erfindung**

Aufgabe der Erfindung ist es deshalb, ein Verfahren zum Betrieb einer Umrichterschaltung anzugeben, mittels welchem durch an die Umrichterschaltung angeschlossene LCL-Filter verursachte Verzerrungen in den Filterausgangsströmen und Filterausgangsspannungen aktiv gedämpft werden können. Ferner ist es die Aufgabe der Erfindung, eine Vorrichtung anzugeben, mit der das Verfahren in besonders einfacher Weise durchgeführt werden kann. Diese Aufgaben werden durch die Merkmale des Anspruchs 1 bzw. des Anspruchs 6 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern und ein an jedem Phasenanschluss der Umrichtereinheit angeschlossenes LCL-Filter auf. Beim erfindungsgemässen Verfahren zum Betrieb der Umrichterschaltung werden nun die ansteuerbaren Leistungshalbleiterschalter mittels eines aus Referenzspannungen gebildeten Ansteuersignals angesteuert. Erfindungsgemäss werden die Referenzspannungen aus der Subtraktion von Dämpfungsspannungen von Referenzphasenanschlussspannungen gebildet, wobei die Dämpfungsspannungen aus mit einem einstellbaren Dämpfungsfaktor gewichteten Filterkapazitätsströmen der LCL-Filter gebildet werden. Die Dämpfungsspannungen sind damit proportional den Filterkapazitätsströmen, welche Dämpfungsspannungen dann von den Referenzphasenanschlussspannungen subtrahiert werden, was dem Anschluss eines Dämpfungswiderstandes an jeden Phasenanschluss der Umrichtereinheit gleich kommt. Vorteilhaft können damit Verzerrungen, d.h. unerwünschte Schwingungen, in den Filterausgangsströmen und Filterausgangsspannungen aktiv gedämpft werden, so dass diese Verzerrungen stark reduziert werden und bestenfalls weitestgehend unterdrückt werden. Ein weiterer Vorteil des erfindungsgemässen Verfahrens liegt darin, dass kein diskreter, platzraubender, aufwendig realisierter und damit teurer Dämpfungswiderstand an den jeweiligen Phasenanschluss angeschlossen werden muss, um die unerwünschten Verzerrungen effektiv dämpfen zu können.

Die erfindungsgemässe Vorrichtung zur Durchführung des Verfahrens zum Betrieb der Umrichterschaltung weist eine der Erzeugung von Referenzspannungen dienende Regelungseinrichtung auf, die über eine Ansteuerschaltung zur Bildung eines Ansteuersignals mit den ansteuerbaren Leistungshalbleiterschaltern verbunden ist. Erfindungsgemäss umfasst die Regelungseinrichtung eine erste Berechnungseinheit zur Bildung von Referenzspannungen aus der Subtraktion von Dämpfungsspannungen von Referenzphasenanschlussspannungen, wobei der Berechnungseinheit Referenzphasenanschlussspannungen und zur Bildung der Dämpferspannungen Filterkapazitätsströme der LCL-Filter zugeführt sind. Weiterhin weist die Regelungseinrichtung eine Reglereinheit zur Erzeugung der Referenzphasenanschlussspannungen auf. Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1 eine Ausführungsform einer erfindungsgemässen Vorrichtung zur Durchführung des erfindungsgemässen Verfahrens zum Betrieb einer Umrichterschaltung,

Fig. 2 eine Ausführungsform einer zweiten Berechnungseinheit,

Fig. 3 ein zeitlicher Verlauf der Filterausgangsströme mit aktiver Dämpfung nach dem erfindungsgemässen Verfahren und

Fig. 4 ein zeitlicher Verlauf der Filterausgangsströme mit aktiver Dämpfung und zusätzlicher aktiver Verringerung von Oberschwingungen nach dem erfindungsgemässen Verfahren.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand, welches durch die Ansprüche definiert wird.

## Wege zur Ausführung der Erfindung

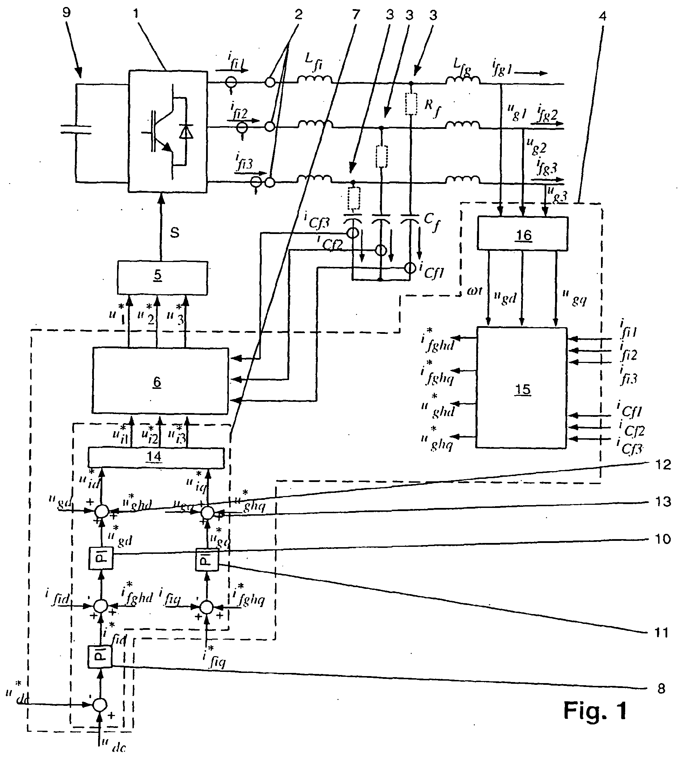

In Fig. 1 ist eine Ausführungsform einer erfindungsgemässen Vorrichtung zur Durchführung des erfindungsgemässen Verfahrens zum Betrieb einer Umrichterschaltung gezeigt. Die Umrichterschaltung weist gemäss Fig. 1 eine Umrichtereinheit 1 mit einer Vielzahl an ansteuerbaren Leistungshalbleiterschaltern und ein an jedem Phasenanschluss 2 der Umrichtereinheit 1 angeschlossenes LCL-Filter 3 auf. Demnach weist jedes LCL-Filter 3 eine erste Filterinduktivität $L_{fi}$, eine zweite Filterinduktivität $L_{fg}$ sowie eine Filterkapazität $C_l$ auf, wobei die erste Filterinduktivität $L_{fi}$ mit dem zugehörigen Phasenanschluss 2 der Umrichtereinheit 1, mit der zweiten Filterinduktivität $L_{fg}$ und mit der Filterkapazität $C_f$ verbunden ist. Weiterhin sind die Filterkapazitäten $C_f$ der einzelnen LCL-Filter 3 miteinander verbunden. Typischerweise weist jedes LCL-Filter 3 einen nahezu vernachlässigbaren Filterwiderstand $R_f$ auf, welcher in Serie zu der Filterkapazität $C_f$ des zugehörigen LCL-Filters 3 geschaltet ist und ohmsche Verluste des LCL-Filters 3 repräsentiert. In Fig. 1 ist die Umrichtereinheit 1 beispielhaft dreiphasig ausgeführt. Es sei erwähnt, dass die Umrichtereinheit 1 allgemein als jedwede Umrichtereinheit 1 zur Schaltung von ≥ 2 Schaltspannungsniveaus (Multi-Level-Umrichterschaltung) bezüglich der Spannung eines mit der Umrichtereinheit 1 verbundenen kapazitiven Energiespeichers 9 ausgebildet sein kann, wobei dann der kapazitive Energiespeicher 9 durch eine beliebige Anzahl an Kapazitäten gebildet ist, welche Kapazitäten dann angepasst an die entsprechend ausgeführte Teilumrichterschaltung verschaltet sind.

Beim erfindungsgemässen Verfahren zum Betrieb der Umrichterschaltung werden nun die ansteuerbaren Leistungshalbleiterschalter der Umrichtereinheit 1 mittels eines aus Referenzspannungen $u^*_1$, $u^*_2$, $u^*_3$ gebildeten Ansteuersignals S angesteuert. Zur Bildung des Ansteuersignals dient gängigerweise eine Zuordnungstabelle (look-up table), bei welcher Referenzspannungswerten entsprechende Ansteuersignale fest zugeordnet sind, oder ein Modulator, welcher auf der Pulsweitenmodulation basiert. Erfindungsgemäss werden die Referenzspannungen $u^*_1$, $u^*_2$, $u^*_3$ aus der Subtraktion von Dämpfungsspannungen $u_{d1}$, $u_{d2}$, $u_{d3}$ von Referenzphasenanschlussspannungen $u^*_{i1}$, $u^*_{i2}$, $u^*_{i3}$ gebildet, wobei die Dämpfungsspannungen $u_{d1}$, $u_{d2}$, $u_{d3}$ aus mit einem einstellbaren Dämpfungsfaktor $K_f$ gewichteten Filterkapazitätsströmen $i_{Cf1}$, $i_{Cf2}$, $i_{Cf3}$ der LCL-Filter 3 gebildet werden, was insbesondere nachfolgende Formel verdeutlicht.

$$u_d = K_f \cdot i_{Cf} \cdot$$

Die Dämpfungsspannungen $u_{d1}$, $u_{d2}$, $u_{d3}$ sind damit proportional den Filterkapazitätsströmen $i_{Cf1}$, $i_{Cf2}$, $i_{Cf3}$, welche Dämpfungsspannungen $U_{d1}$, $u_{d2}$, $u_{d3}$ dann von den Referenzphasenanschlussspannungen $u^*_{i1}$, $u^*_{i2}$, $u^*_{i3}$ subtrahiert werden, was dem Anschluss eines Dämpfungswiderstandes an jeden Phasenanschluss 2 der Umrichtereinheit 1 entspricht. Mit Vorteil können damit Verzerrungen, d.h. unerwünschte Schwingungen, in den Filterausgangsströmen $i_{fg1}$, $i_{fg2}$, $i_{tg3}$ und Filterausgangsspannungen $u_{g1}$, $u_{g2}$, $u_{g3}$ aktiv gedämpft werden, so dass diese Verzerrungen stark reduziert werden und bestenfalls weitestgehend unterdrückt werden. Zudem muss kein diskreter, platzraubender, aufwendig realisierter und damit teurer Dämpfungswiderstand an den jeweiligen Phasenanschluss angeschlossen werden, um die unerwünschten Verzerrungen effektiv dämpfen zu können.

Vorzugsweise wird der Dämpfungsfaktor $K_f$ so eingestellt, dass die unerwünschten Schwingungen der Filterausgangsspannungen $u_{g1}$, $u_{g2}$, $u_{g3}$ beziehungsweise von Phasenanschlussspannungen, insbesondere Oberschwingungen, gerade nicht verstärkt werden.

Gemäss Fig. 1 weist die erfindungsgemässe Vorrichtung zur Durchführung des erfindungsgemässen Verfahrens zum Betrieb einer Umrichterschaltung dazu eine der Erzeugung der Referenzspannungen $u^*_1$, $u^*_2$, $u^*_3$ dienende Regelungseinrichtung 4 auf, die über eine Ansteuerschaltung 5 zur Bildung des Ansteuersignals S mit den ansteuerbaren Leistungshalbleiterschaltern verbunden ist. Die Ansteuerschaltung 5 umfasst beispielsweise eine Zuordnungstabelle (look-up table), bei welcher Referenzspannungswerten entsprechende Ansteuersignale fest zugeordnet sind, oder ein Modulator, welcher auf der Pulsweitenmodulation basiert. Erfindungsgemäss umfasst die Regelungseinrichtung 4 umfasst eine erste Berechnungseinheit 6 zur Bildung der Referenzspannungen $u^*_1$, $u^*_2$, $u^*_3$ aus der Subtraktion von Dämpfungsspannungen $u_{d1}$, $u_{d2}$, $u_{d3}$ von Referenzphasenanschlussspannungen $u^*_{i1}$, $u^*_{i2}$, $u^*_{i3}$, wobei der ersten Berechnungseinheit 6 die Referenzphasenanschlussspannungen $u^*_{i1}$, $u^*_{i2}$, $u^*_{i3}$ und zur Bildung der Dämpferspannungen $u_{d1}$, $u_{d2}$, $u_{d3}$ Filterkapazitätsströme $i_{Cf1}$, $i_{Cf2}$, $i_{Cf3}$ der LCL-Filter 3 zugeführt sind. Die Filterkapazitätsströme $i_{Cf1}$, $i_{Cf2}$, $i_{Cf3}$ sind, wie in Fig. 1 gezeigt, durch entsprechende Messeinrichtungen gemessen. Zudem umfasst die Regelungseinrichtung 4 eine Reglereinheit 7 zur Erzeugung der Referenzphasenanschlussspannungen $u^*_{i1}$, $u^*_{i2}$, $u^*_{i3}$ auf. Die erfindungsgemässe Vorrichtung zur Durchführung des Verfahrens zum Betrieb der Umrichterschaltung ist demnach sehr einfach und kostengünstig zu realisieren, da der Schaltungsaufwand äusserst gering gehalten werden kann und ferner nur eine geringe Anzahl an Bauelementen für den Aufbau benötigt wird. Mittels dieser Vorrichtung ist das erfindungsgemässe Verfahren somit besonders einfach durchführbar.

Es hat sich als vorteilhaft erwiesen, dass die Filterkapazitätsströme $i_{Cf1}$, $i_{Cf2}$, $i_{Cf3}$ mittels eines Hochpassfilters gefiltert werden. Dadurch werden die Dämpfungsspannungen $u_{d1}$, $u_{d2}$, $u_{d3}$ nur aus Oberschwingungen der Filterkapazitätsströme $i_{Cf1}$, $i_{Cf2}$, $i_{Cf3}$, insbesondere höherfrequente Oberschwingungen der Filterkapazitätsströme $i_{Cf1}$, $i_{Cf2}$, $i_{Cf3}$, und dem einstellbaren Dämpfungsfaktor $K_f$ gebildet, so dass die erfindungsgemässe aktive Dämpfung vorteilhaft nur auf die Oberschwingungen in den Filterausgangsströmen $i_{fg1}$, $i_{fg2}$, $i_{fg3}$ und Filterausgangsspannungen $u_{g1}$, $u_{g2}$, $u_{g3}$ wirkt. Zur Hochpassfilterung der Filterkapazitätsströme $i_{Cf1}$, $i_{Cf2}$, $i_{Cf3}$ ist ein Hochpassfilter vorgesehen, welcher zwischen die Messeinrichtungen zur Messung der Filterkapazitätsströme $i_{Cf1}$, $i_{Cf2}$, $i_{Cf3}$ und der ersten Berechnungseinheit 6 eingeschaltet ist, wobei der Hochpassfilter in Fig. 1 der Übersichtlichkeit halber nicht dargestellt ist.

Die Referenzphasenanschlussspannungen $u^*_{i1}$, $u^*_{i2}$, $u^*_{i3}$ werden aus einer durch Ausregeln der Gleichspannung $u_{dc}$ eines mit der Umrichtereinheit 1 verbundenen kapazitiven Energiespeichers 9 auf einen Gleichspannungsreferenzwert $u^*_{dc}$ erzeugten d-Komponente der Park-Clarke-Transformation von Referenzphasenanschlussströmen $i^*_{fid}$ und aus einer vorgebbaren q-Komponente der Park-Clarke-Transformation der Referenzphasenanschlussströme $-i^*_{fiq}$ gebildet. Die Ausregelung erfolgt vorzugsweise nach einer Proportional-Integral-Charakteristik. Gemäss Fig. 1 weist die Reglereinheit 7 zur Ausregelung der Gleichspannung $u_{dc}$ des kapazitiven Energiespeichers 9 auf den Gleichspannungsreferenzwert $u^*_{dc}$ einen ersten Proportional-Integral-Regler 8 auf, dem die Differenz aus der Gleichspannung $(u_{dc})$ des kapazitiven Energiespeichers 9 und des Gleichspannungsreferenzwertes $u^*_{dc}$ eingangsseitig zugeführt sind und bei dem die d-Komponente der Park-Clarke-Transformation von Referenzphasenanschlussströmen $i^*_{fid}$ ausgangsseitig anliegt.

Die Park-Clarke-Transformation ist allgemein definiert

$$\overline{x} = \left(x_d + jx_q\right)e^{j\omega t}$$

mit den in Fig. 1 dargestellten Grössen

$$\overline{u}_g = u_{g1} + u_{g2}e^{j\gamma} + u_{g3}e^{j2\gamma}$$

$$\overline{i}_{fi} = i_{fi1} + i_{fi2}e^{j\gamma} + i_{fi3}e^{j2\gamma}$$

$$\overline{i}_{Cf} = i_{Cf1} + i_{Cf2}e^{j\gamma} + i_{Cf3}e^{j2\gamma}$$

$$\overline{i}_{fg} = i_{fg1} + i_{fg2}e^{j\gamma} + i_{fg3}e^{j2\gamma}$$

$$\text{mit } \gamma = 2\pi/3,$$

wobei $\overline{x}$ eine komplexe Grösse, $x_d$ die d-Komponente der Park-Clarke-Transformation der Grösse $\overline{x}$ und $x_q$ die q-Komponente der Park-Clarke-Transformation der Grösse $\overline{x}$ ist. Sämtliche bereits erwähnte und nachfolgende noch erwähnte Park-Clarke-Transformationen von Grössen werden nach vorstehend genannter Formel erzeugt. Vorteilhaft werden bei der Park-Clarke-Transformation nicht nur die Grundschwingung der komplexen Grösse $\overline{x}$ trans-formiert, sondern auch sämtlich vorkommende Oberschwingungen der komplexen Grösse $\overline{x}$.

Die Regelungseinrichtung 4 gemäss Fig. 1 weist eine dritte Berechnungseinheit 16 zur Bildung der d-Komponente der Park-Clarke-Transformation der Filterausgangsspannungen $u_{gd}$, der q-Komponente der Park-Clarke-Transformation der Filterausgangsspannungen $u_{gq}$ und der Grundschwingungswinkel $\omega t$ der Filterausgangsspannungen $u_{g1}$, $u_{g2}$, $u_{g3}$ auf, wobei der dritten Berechnungseinheit 16 Filterausgangsspannungen $u_{g1}$, $u_{g2}$, $u_{g3}$ der LCL-Filter 3 eingangsseitig zugeführt sind. Die dritte Berechnungseinheit 16 ist vorzugsweise als Phasenregelkreis (Phase locked loop) realisiert, wobei die Park-Clarke-Transformationen der einzelnen Grössen nach den vorstehend genannten Definitionen erfolgen.

Weiterhin wird die d-Komponente der Park-Clarke-Transformation von Referenzfilterausgangsspannungen $u^*_{gd}$ durch Ausregeln der d-Komponente der Park-Clarke-Transformation der Phasenanschlussströme $i_{fid}$ auf die Summe aus der d-Komponente der Park-Clarke-Transformation der Referenzphasenanschlussströme $i^*_{fid}$ und einer d-Komponente der Park-Clarke-Transformation mindestens einer Oberschwingung von Filterausgangsströmen $i^*_{fghd}$ bezüglich der Grundschwingung der Filterausgangsströme $i_{fg1}$, $i_{fg2}$, $i_{fg3}$ erzeugt. Die Ausregelung erfolgt vorzugsweise nach einer Proportional-Integral-Charakteristik. Zudem wird die q-Komponente der Park-Clarke-Transformation der Referenzfilterausgangssparinungen $u^*_{gq}$ durch Ausregeln der q-Komponente der Park-Clarke-Transformation der Phasenanschlussströme $i_{fig}$ auf die Summe aus der q-Komponente der Park-Clarke-Transformation der Referenzphasenanschlussströme $i^*_{fiq}$ und einer q-Komponente der Park-Clarke-Transformation mindestens einer Oberschwingung der Filterausgangsströme $i^*_{fghq}$ bezüglich der Grundschwingung der Filterausgangsströme $i_{fg1}$, $i_{fg2}$, $i_{fg3}$ erzeugt. Die Ausregelung erfolgt vorzugsweise nach einer Proportional-Integral-Charakteristik. Der Index h der d-Komponente und der q-Komponente der Park-Clarke-Transformation einer Oberschwingung der Filterausgangsströme $i^*_{fghd}$, $i^*_{fghq}$ steht für die h-te Oberschwingung dieser Grössen, wobei h=1, 2, 3, ... ist. Bei den nachfolgend noch eingeführten Grössen mit dem Index h steht der Index h ebenfalls für die h-te Oberschwingung der zugehörigen Grösse, wobei h=1, 2, 3, ... ist. Gemäss Fig. 1 weist die Reglereinheit 7 zur Ausregelung der d-Komponente der Park-Clarke-Transformation der Phasenanschlussströme $i_{lid}$ auf die Summe aus der d-Komponente der Park-Clarke-Transformation der Referenzphasenanschlussströme $i^*_{fid}$ und einer d-Komponente der Park-Clarke-Transformation mindestens einer Oberschwingung der Filterausgangsströme $i^*_{fghd}$ bezüglich der Grundschwingung der Filterausgangsströme $i_{fg1}$, $i_{fg2}$, $i_{fg3}$ einen zweiten Proportional-Integral-Regler 10 auf, dem die Differenz aus der Summe aus der d-Komponente der Park-Clarke-Transformation der Referenzphasenanschlussströme $i^*_{fid}$ und einer d-Komponente der Park-Clarke-Transformation mindestens einer Oberschwingung der Filterausgangsströme $i^*_{fghd}$ bezüglich der Grundschwingung der Filterausgangsströme $i_{fg1}$, $i_{fg2}$, $i_{fg3}$ und der d-Komponente der Park-Clarke-Transformation der Phasenanschlussströme $i_{fig}$ eingangsseitig zugeführt sind und bei dem die d-Komponente der Park-Clarke-Transformation der Referenzfilterausgangsspannungen $u^*_{gd}$ ausgangsseitig anliegt. Zudem weist die Reglereinheit 7 zur Ausregelung der q-Komponente der Park-Clarke-Transformation der Phasenanschlussströme $i_{fiq}$ auf die Summe aus der q-Komponente der Park-Clarke-Transformation der Referenzphasenanschlussströme $i^*_{fiq}$ und der q-Komponente der Park-Clarke-Transformation mindestens einer Oberschwingung der Filterausgangsströme $i^*_{fghq}$ bezüglich der Grundschwingung der Filterausgangsströme $i_{fg1}$, $i_{fg2}$, $i_{fg3}$ einen dritten Proportional-Integral-Regler 11 auf, dem die Differenz aus der Summe aus der q-Komponente der Park-Clarke-Transformation der Referenzphasenanschlussströme $i^*_{fig}$ und einer q-Komponente der Park-Clarke-Transformation mindestens einer Oberschwingung der Filterausgangsströme $i^*_{fghq}$ bezüglich der Grundschwingung der Filterausgangsströme $i_{fg1}$, $i_{fg2}$, $i_{fg3}$ und der q-Komponente der Park-Clarke-Transformation der Phasenanschlussströme $i_{fiq}$ eingangsseitig zugeführt sind und bei dem die q-Komponente der Park-Clarke-Transformation der Referenzfilterausgangsspannungen $u^*_{gq}$ ausgangsseitig anliegt.

Desweiteren wird die d-Komponente der Park-Clarke-Transformation der Referenzphasenanschlussspannungen $u^*_{id}$ durch die Summe aus der d-Komponente der Park-Clarke-Transformation der Referenzfilterausgangsspannungen $u^*_{gd}$ und der d-Komponente von Filterausgangsspannungen $u_{gd}$ und einer d-Komponente der Park-Clarke-Transformation mindestens einer Oberschwingung der Filterausgangsspannungen $u^*_{ghd}$ erzeugt. Zudem wird die q-Komponente der Park-Clarke-Transformation der Referenzphasenanschlussspannungen $u^*_{iq}$ durch die Summe aus der q-Komponente der Park-Clarke-Transformation der Referenzfilterausgangsspannungen $u^*_{gq}$ und der q-Komponente der Park-Clarke-Transformation der Filterausgangsspannungen $u_{gq}$ und einer q-Komponente der Park-Clarke-Transformation mindestens einer Oberschwingung der Filterausgangsspannungen $u^*_{ghq}$ erzeugt. Zur Erzeugung der d-Komponente der Park-Clarke-Transformation der Referenzphasenanschlussspannungen $u^*_{id}$ weist die Reglereinheit 7 einen ersten Summierer 12 auf, dem die d-Komponente der Park-Clarke-Transformation der Referenzfilterausgangsspannungen $u^*_{gd}$, die d-Komponente der Filterausgangsspannungen $u_{gd}$ und die d-Komponente der Park-Clarke-Transformation mindestens einer Oberschwingung der Filterausgangsspannungen $u^*_{ghd}$ zugeführt sind. Zudem weist die Reglereinheit 7 zur Erzeugung der q-Komponente der Park-Clarke-Transformation der Referenzphasenanschlussspannungen $u^*_{iq}$ gemäss Fig. 1 einen zweiten Summierer 13 auf, dem die q-Komponente der Park-Clarke-Transformation der Referenzfilterausgangsspannungen $u^*_{gq}$, die q-Komponente der Park-Clarke-Transformation der Filterausgangsspannungen $u_{gq}$ und die q-Komponente der Park-Clarke-Transformation mindestens einer Oberschwingung der Filterausgangsspannungen $u^*_{ghq}$ zugeführt sind.

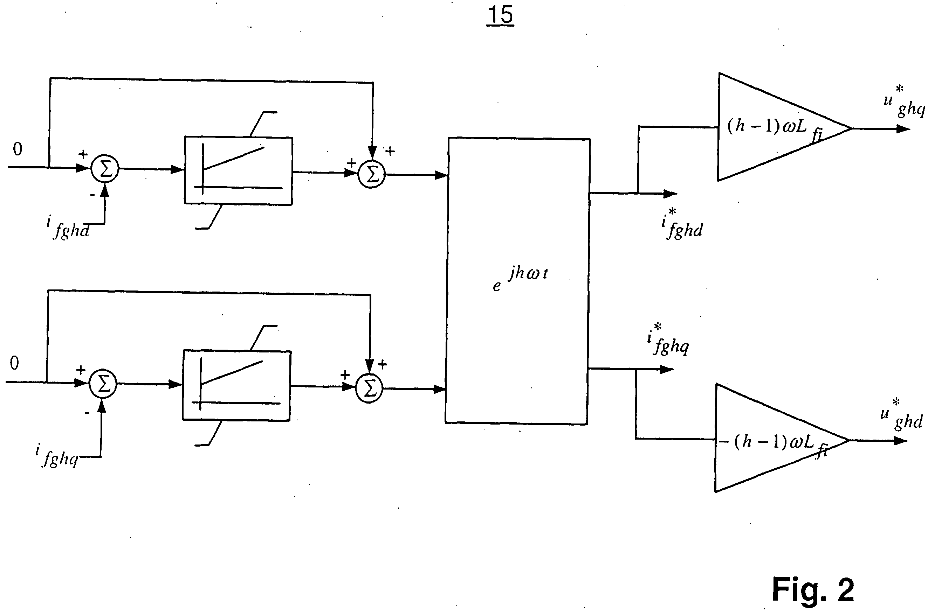

Zur Bildung der bereits vorstehend genannten d-Komponente der Park-Clarke-Transformation mindestens einer Oberschwingung der Filterausgangsströme $i^*_{fghd}$ bezüglich der Grundschwingung der Filterausgangsströme $i_{fg1}$, $i_{fg2}$, $i_{fg3}$, der q-Komponente der Park-Clarke-Transformation mindestens einer Oberschwingung der Filterausgangsströme $i^*_{fghq}$ bezüglich der Grundschwingung der Filterausgangsströme $i_{fg1}$, $i_{fg2}$, $i_{fg3}$, der d-Komponente der Park-Clarke-Transformation der mindestens einen Oberschwingung der Referenzfilterausgangsspannungen $u^*_{ghd}$, und der q-Komponente der Park-Clarke-Transformation der mindestens einen Oberschwingung der Referenzfilterausgangsspannungen $u^*_{ghq}$ weist die Regelungseinrichtung 4 gemäss Fig. 1 eine zweite Berechnungseinheit 15 auf. Der zweiten Berechnungseinheit 15 sind gemäss Fig. 1 die d-Komponente der Filterausgangsspannungen $u_{gd}$, die q-Komponente der Filterausgangsspannungen $u_{gq}$, der Phasenanschlussströme $i_{fi1}$, $i_{fi2}$, $i_{fi3}$, die Filterkapazitätsströme $i_{Cf1}$, $i_{Cf2}$, $i_{Cf3}$ und der Grundschwingungswinkel $\omega t$ der Filterausgangsspannungen $u_{g1}$, $u_{g2}$, $u_{g3}$ eingangsseitig zugeführt. Zur Veranschaulichung der Bildung der einzelnen Grössen in der Berechnungseinheit 15, ist in Fig. 2 eine Ausführungsform der zweiten Berechnungseinheit 15 dargestellt, wobei die sich die in Fig. 2 gezeigten Eingangsgrössen gemäss nachfolgender Formel

$$i_{fghd} + ji_{fghq} = i_{fihd} + ji_{fihq} - (i_{Cfhd} + ji_{Cfhq})$$

ergeben, wobei sich die d-Komponenten der Park-Clarke-Transformation und die q-Komponenten der Park-Clarke-Transformation durch Anwendung der Park-Clarke-Transformation auf die gemessenen Phasenanschlussströme $i_{fi1}$, $i_{fi2}$, $i_{fi3}$ inklusive der zugehörigen Oberschwingungen und Filterkapazitätsströme $i_{Cf1}$, $i_{Cf2}$, $i_{Cf3}$ inklusive der zugehörigen Oberschwingungen ergeben. Diese Park-Clarke-Transformation wird insbesondere in der zweiten Berechnungseinheit 15 durchgeführt, welche jedoch in der zweiten Berechnungseinheit 15 gemäss Fig. 2 der Übersichtlichkeit halber nicht dargestellt ist.

Schliesslich werden die Referenzphasenanschlussspannungen $u^*_{i1}$, $u^*_{i2}$, $u^*_{i3}$ durch eine inverse Park-Clarke-Transformation der d-Komponente der Park-Clarke-Transformation der Referenzphasenanschlussspannungen $u^*_{id}$ und der q-Komponente der Park-Clarke-Transformation der Referenzphasenanschlussspannungen $u^*_{iq}$ erzeugt. Gemäss Fig. 1 weist die Reglereinheit 7 dazu eine Berechnungseinheit 14 zur Bildung der Referenzphasenanschlussspannungen $u^*_{i1}$, $u^*_{i2}$, $u^*_{i3}$ durch eine inverse Park-Clarke-Transformation auf, der die d-Komponente der Park-Clarke-Transformation der Referenzphasenanschlussspannungen $u^*_{id}$ und die q-Komponente der Park-Clarke-Transformation der Referenzphasenanschlussspannungen $u^*_{iq}$ eingangsseitig zugeführt sind.

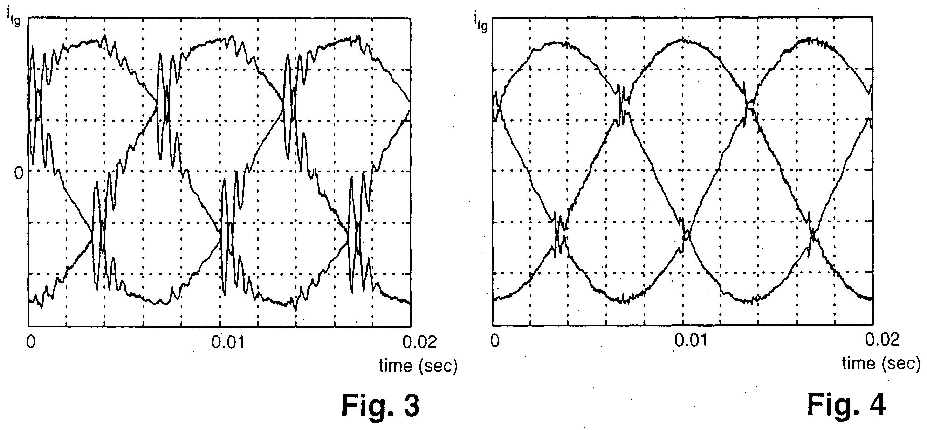

In Fig. 3 ist zur Veranschaulichung der Wirkungsweise der aktiven Dämpfung nach dem vorstehend erläuterten erfindungsgemässen Verfahren ein zeitlicher Verlauf der Filterausgangsströme $i_{fg1}$, $i_{fg2}$, $i_{fg3}$ gezeigt, worin unerwünschte Schwingungen in den Filterausgangsströmen $i_{fg1}$, $i_{fg2}$, $i_{fg3}$ aktiv gedämpft werden, so dass diese Verzerrungen stark reduziert werden. Eine weitere Verbesserung in der Reduzierung von Oberschwingungen zeigt ein zeitlicher Verlauf der Filterausgangsströme $i_{fg1}$, $i_{fg2}$, $i_{fg3}$ nach Fig. 4 mit aktiver Dämpfung und zusätzlicher aktiver Verringerung von Oberschwingungen nach dem vorstehend beschriebenen erfindungsgemässen Verfahren.

Es sei erwähnt, dass das sämtliche Schritte des erfindungsgemässen Verfahrens als Software realisiert werden können und diese dann beispielsweise auf ein Computersystem, insbesondere mit einem digitalen Signalprozessor, geladen werden und darauf ablaufen können. Die in einem solchen System vorkommenden digitalen Verzögerungszeiten, insbesondere für die Berechnungen, können beispielsweise durch Addition eines zusätzlichen Terms zu dem Grundschwingungswinkel $\omega t$ bei der Park-Clarke-Transformation allgemein berücksichtigt werden. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 1 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung ist das erfindungsgemässe Verfahren besonders einfach durchführbar.

**Bezugszeichenliste**

| | |
|---|---|
| 1 | Umrichtereinheit |
| 2 | Phasenanschluss der Umrichtereinheit |
| 3 | LCL-Filter |
| 4 | Regelungseinrichtung |
| 5 | Ansteuerschaltung |
| 6 | erste Berechnungseinheit der Regelungseinrichtung |
| 7 | Reglereinheit |
| 8 | erster Proportional-Integral-Regel |
| 9 | kapazitiver Energiespeicher |
| 10 | zweiter Proportional-Integral-Regel |
| 11 | dritter Proportional-Integral-Regel |
| 12 | erster Summierer |
| 13 | zweiter Summierer |
| 14 | Berechnungseinheit der Reglereinheit |
| 15 | zweite Berechnungseinheit der Regelungseinrichtung |
| 16 | dritte Berechnungseinheit der Regelungseinrichtung |

**Patentansprüche**

1. Verfahren zum Betrieb einer Umrichterschaltung, wobei die Umrichterschaltung eine Umrichtereinheit (1) mit einer Vielzahl an ansteuerbaren Leistungshalbleiterschaltern und ein an einem jeden Phasenanschluss (2) der Umrichtereinheit (1) angeschlossene LCL-Filter (3) aufweist,
   bei dem die ansteuerbaren Leistungshalbleiterschalter mittels eines aus Referenzspannungen ($u^*_1$, $u^*_2$, $u^*_3$) gebildeten Ansteuersignals (S) angesteuert werden,
   wobei die Referenzspannungen ($u^*_1$, $u^*_2$, $u^*_3$) aus

einer Subtraktion von Dämpfungsspannungen ($u_{d1}$, $u_{d2}$, $u_{d3}$) von Referenzphasenanschlussspannungen ($u^*_{i1}$, $u^*_{i2}$, $u^*_{i3}$) gebildet werden, wobei die Dämpfungsspannungen ($u_{d1}$, $u_{d2}$, $u_{d3}$) aus mit einem einstellbaren Dämpfungsfaktor ($K_f$) gewichteten Filterkapazitätsströmen ($i_{Cf1}$, $i_{Cf2}$, $i_{Cf3}$) der LCL-Filter (3) gebildet werden, **dadurch gekennzeichnet,**
**dass** die Filterkapazitätsströme ($i_{Cf1}$, $i_{Cf2}$, $i_{Cf3}$) mittels eines Hochpassfilters gefiltert werden.

2. Verfahren nach Anspruch 1, **dadurch gekennzeichnet, dass** die Referenzphasenanschlussspannungen ($u^*_{i1}$, $u^*_{i2}$, $u^*_{i3}$) aus einer durch Ausregeln einer Gleichspannung ($u_{dc}$) eines mit der Umrichtereinheit (1) verbundenen kapazitiven Energiespeichers (9) auf einen Gleichspannungsreferenzwert ($u^*_{dc}$) erzeugten d-Komponente der Park-Clarke-Transformation von Referenzphasenanschlussströmen ($i^*_{fid}$) und aus einer vorgebbaren q-Komponente der Park-Clarke-Transformation der Referenzphasenanschlussströme ($i^*_{fiq}$) gebildet werden.

3. Verfahren nach Anspruch 2, **dadurch gekennzeichnet, dass** die d-Komponente der Park-Clarke-Transformation von Referenzfilterausgangsspannungen ($u^*_{gd}$) durch Ausregeln der d-Komponente der Park-Clarke-Transformation von Phasenanschlussströmen ($i_{fid}$) auf eine Summe aus der d-Komponente der Park-Clarke-Transformation der Referenzphasenanschlussströme ($i^*_{fid}$) und einer d-Komponente der Park-Clarke-Transformation mindestens einer Oberschwingung von Filterausgangsströmen ($i^*_{fghd}$) bezüglich der Grundschwingung von Filterausgangsströme ($i_{fg1}$, $i_{fg2}$, $i_{fg3}$) erzeugt wird, und
dass die q-Komponente der Park-Clarke-Transformation der Referenzfilterausgangsspannungen ($u^*_{gq}$) durch Ausregeln der q-Komponente der Park-Clarke-Transformation der Phasenanschlussströme ($i_{fiq}$) auf eine Summe aus der q-Komponente der Park-Clarke-Transformation der Referenzphasenanschlussströme ($i^*_{fiq}$) und einer q-Komponente der Park-Clarke-Transformation mindestens einer Oberschwingung der Filterausgangsströme ($i^*_{fghq}$) bezüglich der Grundschwingung der Filterausgangsströme ($i_{fg1}$, $i_{fg2}$, $i_{fg3}$) erzeugt wird.

4. Verfahren nach Anspruch 3, **dadurch gekennzeichnet, dass** die d-Komponente der Park-Clarke-Transformation der Referenzphasenanschlussspannungen ($u^*_{id}$) durch eine Summe aus der d-Komponente der Park-Clarke-Transformation der Referenzfilterausgangsspannungen ($u^*_{gd}$) und der d-Komponente von Filterausgangsspannungen ($u_{gd}$) und einer d-Komponente der Park-Clarke-Transformation mindestens einer Oberschwingung der Filterausgangsspannungen ($u^*_{ghd}$) erzeugt wird, und

dass die q-Komponente der Park-Clarke-Transformation der Referenzphasenanschlussspannungen ($u^*_{iq}$) durch eine Summe aus der q-Komponente der Park-Clarke-Transformation der Referenzfilterausgangsspannungen ($u^*_{gq}$) und der q-Komponente der Park-Clarke-Transformation der Filterausgangsspannungen ($u_{gq}$) und einer q-Komponente der Park-Clarke-Transformation mindestens einer Oberschwingung der Filterausgangsspannungen ($u^*_{ghq}$) erzeugt wird.

5. Verfahren nach Anspruch 4, **dadurch gekennzeichnet, dass** die Referenzphasenanschlussspannungen ($u^*_{i1}$, $u^*_{i2}$, $u^*_{i3}$) durch eine inverse Park-Clarke-Transformation der d-Komponente der Park-Clarke-Transformation der Referenzphasenanschlussspannungen ($u^*_{id}$) und der q-Komponente der Park-Clarke-Transformation der Referenzphasenanschlussspannungen ($u^*_{iq}$) erzeugt wird.

6. Vorrichtung zur Durchführung eines Verfahrens zum Betrieb einer Umrichterschaltung, wobei die Umrichterschaltung eine Umrichtereinheit (1) mit einer Vielzahl an ansteuerbaren Leistungshalbleiterschaltern und ein an einem jeden Phasenanschluss (2) der Umrichtereinheit (1) angeschlossenes LCL-Filter (3) aufweist,
mit einer der Erzeugung von Referenzspannungen ($u^*_1$, $u^*_2$, $u^*_3$) dienenden Regelungseinrichtung (4), die über eine Ansteuerschaltung (5) zur Bildung eines Ansteuersignals (S) mit den ansteuerbaren Leistungshalbleiterschaltern verbunden ist,
wobei die Regelungseinrichtung (4) umfasst:
eine erste Berechnungseinheit (6) zur Bildung von Referenzspannungen ($u^*_1$, $u^*_2$, $u^*_3$) aus einer Subtraktion von Dämpfungsspannungen ($u_{d1}$, $u_{d2}$, $u_{d3}$) von Referenzphasenanschlussspannungen ($u^*_{i1}$, $u^*_{i2}$, $u^*_{i3}$), wobei der ersten Berechnungseinheit (6) Referenzphasenanschlussspannungen ($u^*_{i1}$, $u^*_{i2}$, $u^*_{i3}$) und zur Bildung der Dämpferspannungen ($u_{d1}$, $u_{d2}$, $u_{d3}$) Filterkapazitätsströme ($i_{Cf1}$, $i_{Cf2}$, $i_{Cf3}$) der LCL-Filter (3) zugeführt sind, und eine Reglereinheit (7), **dadurch gekennzeichnet, dass** die Filterkapazitätsströme ($i_{Cf1}$, $i_{Cf2}$, $i_{Cf3}$) mittels eines Hoch-passfilters gefiltert sind.

7. Vorrichtung nach Anspruch 6, **dadurch gekennzeichnet, dass** die Reglereinheit (7) einen ersten Proportional-Integral-Regler (8) aufweist, dem eine Differenz aus der Gleichspannung ($u_{dc}$) eines mit der Umrichtereinheit (1) verbundenen kapazitiven Energiespeichers (9) und eines Gleichspannungsreferenzwertes ($u^*_{dc}$) eingangsseitig zugeführt sind und bei dem die d-Komponente der Park-Clarke-Transformation von Referenzphasenanschlussströmen ($i^*_{fid}$) ausgangsseitig anliegt.

8. Vorrichtung nach Anspruch 7, **dadurch gekennzeichnet, dass** die Reglereinheit (7) einen zweiten Proportional-Integral-Regler (10) aufweist, dem eine Differenz aus der Summe aus der d-Komponente der Park-Clarke-Transformation der Referenzphasenanschlussströme (i*$_{fid}$) und einer d-Komponente der Park-Clarke-Transformation mindestens einer Oberschwingung von Filterausgangsströmen (i*$_{fghd}$) bezüglich der Grundschwingung der Filterausgangsströme (i$_{fg1}$, i$_{fg2}$, i$_{fg3}$) und der d-Komponente der Park-Clarke-Transformation der Phasenanschlussströme (i$_{fid}$) eingangsseitig zugeführt sind und bei dem die d-Komponente der Park-Clarke-Transformation von Referenzfilterausgangsspannungen (u*$_{gd}$) ausgangsseitig anliegt, und dass die Reglereinheit (7) einen dritten Proportional-Integral-Regler (11) aufweist, dem eine Differenz aus der Summe aus der q-Komponente der Park-Clarke-Transformation der Referenzphasenanschlussströme (i*$_{fiq}$) und einer q-Komponente der Park-Clarke-Transformation mindestens einer Oberschwingung der Filterausgangsströme (i*$_{fghq}$) bezüglich der Grundschwingung der Filterausgangsströme (i$_{fg1}$, i$_{fg2}$, i$_{fg3}$) und der q-Komponente der Park-Clarke-Transformation der Phasenanschlussströme (i$_{fiq}$) eingangsseitig zugeführt sind und bei dem die q-Komponente der Park-Clarke-Transformation der Referenzfilterausgangsspannungen (u*$_{gq}$) ausgangsseitig anliegt.

9. Vorrichtung nach Anspruch 8, **dadurch gekennzeichnet, dass** die Reglereinheit (7) einen ersten Summierer (12) zur Erzeugung der d-Komponente der Park-Clarke-Transformation der Referenzphasenanschlussspannungen (u*$_{id}$) aufweist, dem die d-Komponente der Park-Clarke-Transformation der Referenzfilterausgangsspannungen (u*$_{gd}$), die d-Komponente von Filterausgangsspannungen (u$_{gd}$) und eine d-Komponente der Park-Clarke-Transformation mindestens einer Oberschwingung der Filterausgangsspannungen (u*$_{ghd}$) zugeführt sind, und dass die Reglereinheit (7) einen zweiten Summierer (13) zur Erzeugung der q-Komponente der Park-Clarke-Transformation der Referenzphasenanschlussspannungen (u*$_{iq}$) aufweist, dem die q-Komponente der Park-Clarke-Transformation der Referenzfilterausgangsspannungen (u*$_{gq}$), die q-Komponente der Park-Clarke-Transformation der Filterausgangsspannungen (u$_{gq}$) und eine q-Komponente der Park-Clarke-Transformation mindestens einer Oberschwingung der Filterausgangsspannungen (u*$_{ghq}$) zugeführt sind.

10. Vorrichtung nach Anspruch 9, **dadurch gekennzeichnet, dass** die Reglereinheit (7) eine Berechnungseinheit (14) zur Bildung der Referenzphasenanschlussspannungen (u*$_{i1}$, u*$_{i2}$, u*$_{i3}$) durch eine inverse Park-Clarke-Transformation aufweist, der die d-Komponente der Park-Clarke-Transformation der Referenzphasenanschlussspannungen (u*$_{id}$) und die q-Komponente der Park-Clarke-Transformation der Referenzphasenanschlussspannungen (u*$_{iq}$) eingangsseitig zugeführt sind.

11. Vorrichtung nach einem der Ansprüche 7 bis 10, **dadurch gekennzeichnet, dass** die Regelungseinrichtung (4) eine zweite Berechnungseinheit (15) zur Bildung einer d-Komponente der Park-Clarke-Transformation mindestens einer Oberschwingung der Filterausgangsströme (i*$_{fghd}$) bezüglich der Grundschwingung der Filterausgangsströme (i$_{fg1}$, i$_{fg2}$, i$_{fg3}$), einer q-Komponente der Park-Clarke-Transformation mindestens einer Oberschwingung der Filterausgangsströme (i*$_{fghq}$) bezüglich der Grundschwingung der Filterausgangsströme (i$_{fg1}$, i$_{fg2}$, i$_{fg3}$), der d-Komponente der Park-Clarke-Transformation der mindestens einen Oberschwingung der Referenzfilterausgangsspannungen (u*$_{ghd}$), und der q-Komponente der Park-Clarke-Transformation der mindestens einen Oberschwingung der Referenzfilterausgangsspannungen (u*$_{ghq}$), aufweist, wobei der zweiten Berechnungseinheit (15) die d-Komponente der Filterausgangsspannungen (u$_{gd}$), die q-Komponente der Filterausgangsspannungen (u$_{gq}$), der Phasenanschlussströme (i$_{fi1}$, i$_{fi2}$, i-$_{fi3}$), die Filterkapazitätsströme (i$_{Cf1}$, i$_{Cf2}$, i$_{Cf3}$) und ein Grundschwingungswinkel (ωt) der Filterausgangsspannungen (u$_{g1}$, u$_{g2}$, u$_{g3}$) eingangsseitig zugeführt sind.

12. Vorrichtung nach Anspruch 11, **dadurch gekennzeichnet, dass** die Regelungseinrichtung (4) eine dritte Berechnungseinheit (16) zur Bildung der d-Komponente der Park-Clarke-Transformation der Filterausgangsspannungen (u$_{gd}$), der q-Komponente der Park-Clarke-Transformation der Filterausgangsspannungen (u$_{gq}$) und des Grundschwingungswinkels (ωt) der Filterausgangsspannungen (u$_{g1}$, u$_{g2}$, u$_{g3}$) aufweist, wobei der dritten Berechnungseinheit (16) Filterausgangsspannungen (u$_{g1}$, u$_{g2}$, u$_{g3}$) der LCL-Filter (3) eingangsseitig zugeführt sind.

**Claims**

1. Method for operation of a converter circuit, in which the converter circuit has a converter unit (1) with a multiplicity of drivable power semiconductor switches and an LCL filter (3) which is connected to each phase connection (2) of the converter unit (1), in which the drivable power semiconductor switches are driven by means of a drive signal (S) which is formed from reference voltages (u*$_1$, u*$_2$, u*$_3$), wherein the reference voltages (u*$_1$, u*$_2$, u*$_3$) are formed by subtraction of damping voltages (u$_{d1}$, u$_{d2}$, u$_{d3}$) from reference-phase connection voltages (u*$_{i1}$,

$u^*_{i2}$, $u^*_{i3}$), with the damping voltages ($u_{d1}$, $u_{d2}$, $u_{d3}$) being formed from filter capacitance currents ($i_{Cf1}$, $i_{Cf2}$, $i_{Cf3}$), weighted with a variable damping factor ($K_f$) of the LCL filter (3), **characterized in that** the filter capacitance currents ($i_{Cf1}$, $i_{Cf2}$, $i_{Cf3}$) are filtered by means of a high-pass filter.

2. Method according to Claim 1, **characterized in that** the reference-phase connection voltages ($u^*_{i1}$, $u^*_{i2}$, $u^*_{i3}$) are formed from a d-component of the Park-Clarke transformation (produced by regulation of a dc voltage ($u_{dc}$) of a capacitive energy store (9) which is connected to the converter unit (1) at a dc voltage reference value ($u^*_{dc}$) of reference-phase connection currents ($i^*_{fid}$) and from a predeterminable q-component of the Park-Clarke transformation of the reference-phase connection currents ($i^*_{fiq}$).

3. Method according to Claim 2, **characterized in that** the d-component of the Park-Clarke transformation of reference-filter output voltages ($u^*_{gd}$) is produced by regulation of the d-component of the Park Clarke transformation of the phase connection currents ($i_{fid}$) at the sum of the d-component of the Park-Clarke transformation of the reference-phase connection currents ($i^*_{fid}$) and a d-component of the Park-Clarke transformation of at least one harmonic of filter output currents ($i^*_{fghd}$) with respect to the fundamental of the filter output currents ($i_{fg1}$, $i_{fg2}$, $i_{fg3}$), and **in that** the q-component of the Park-Clarke transformation of the reference-filter output voltages ($u^*_{gq}$) is produced by regulation of the q-component of the Park-Clarke transformation of the phase connection currents ($i_{fiq}$) at the sum of the q-component of the Park-Clarke transformation of the reference-phase connection currents ($i^*_{fid}$) and a q-component of the Park-Clarke transformation of at least one harmonic of the filter output currents ($i^*_{fqhq}$) with respect to the fundamental of the filter output currents ($i_{fg1}$, $i_{fg2}$, $i_{fg3}$).

4. Method according to Claim 3, **characterized in that** the d-component of the Park-Clarke transformation of the reference-phase connection voltages ($u^*_{id}$) is produced by the sum of the d-component of the Park-Clarke transformation of the reference-filter output voltages ($u^*_{gq}$) and the d-component of filter output voltages ($u_{gd}$) and a d-component of the Park-Clarke transformation of at least one harmonic of the filter output voltages ($u^*_{ghd}$), and **in that** the q-component of the Park-Clarke transformation of the reference-phase connection voltages ($u^*_{iq}$) is produced by the sum of the q-component of the Park-Clarke transformation of the reference-filter output voltages ($u^*_{gq}$) and the q-component of the Park-Clarke transformation of the filter output voltages ($u_{gq}$) and a q-component of the Park-Clarke transformation of at least one harmonic of the filter output voltages ($u^*_{ghq}$).

5. Method according to Claim 4, **characterized in that** the reference-phase connection voltages ($u^*_{i1}$, $u^*_{i2}$, $u^*_{i3}$) is produced by inverse Park-Clarke transformation of the d-component of the Park-Clarke transformation of the reference-phase connection voltages ($u^*_{id}$) and the q-component of the Park-Clarke transformation of the reference-phase connection voltages ($u^*_{iq}$).

6. Apparatus for carrying out a method for operation of a converter circuit, in which the converter circuit has a converter unit (1) with a multiplicity of drivable power semiconductor switches and an LCL filter (3) which is connected to each phase connection (2) of the converter unit (1),
having a regulation device (4) which is used for production of reference voltages ($u^*_1$, $u^*_2$, $u^*_3$) and is connected via a drive circuit (5) for formation of a drive signal (S) to the drivable power semiconductor switches,
wherein the regulation device (4) has:

a first calculating unit (6) for formation of reference voltages ($u^*_1$, $u^*_2$, $u^*_3$) from the subtraction of damping voltages ($u_{d1}$, $u_{d2}$, $u_{d3}$) from reference-phase connection voltages ($u^*_{i1}$, $u^*_{i2}$, $u^*_{i3}$), with the first calculation unit (6) being supplied with reference-phase connection voltages ($u^*_{i1}$, $u^*_{i2}$, $u^*_{i3}$) and, in order to form the damper voltages ($u_{d1}$, $u_{d2}$, $u_{d3}$), filter capacitance currents ($i_{Cf1}$, $i_{Cf2}$), $i_{Cf3}$) of the LCL filters (3), and a regulator unit (7), **characterized in that** the filter capacitance currents ($i_{Cf1}$, $i_{Cf2}$, $i_{Cf3}$) are filtered by means of a high-pass filter.

7. Apparatus according to Claim 6, **characterized in that** the regulator unit (7) has a first proportional-integral regulator (8) to whose input side the difference between the dc voltage ($u_{dc}$) of a capacitive energy store (9), which is connected to the converter unit (1) and a dc voltage reference value ($u^*_{dc}$) are supplied, and on whose output side the d-component of the Park-Clarke transformation of reference-phase connection currents ($i^*_{fid}$) is produced.

8. Apparatus according to Claim 7, **characterized in that** the regulator unit (7) has a second proportional-integral regulator (10), to whose input side the difference between the sum of the d-component of the Park-Clarke transformation of the reference-phase connection currents ($i^*_{fid}$) and a d-component of the Park-Clarke transformation of at least one harmonic of the filter output currents ($i^*_{fghd}$) with respect to the fundamental of the filter output currents ($i_{fg1}$, $i_{fg2}$, $i_{fg3}$) and the d-component of the Park-Clarke transformation of the phase connection currents ($i_{fid}$) are supplied, and on whose output side the d-component of the Park-Clarke transformation of the reference-filter output voltages (u*$_{gd}$) is produced, and

**in that** the regulator unit (7) has a third proportional-integral regulator (11), to whose input side the difference between the sum of the q-component of the Park-Clarke transformation of the reference-phase connection currents (i*$_{fid}$) and a q-component of the Park-Clarke transformation of at least one harmonic of the filter output currents (i*$_{fqhq}$) with respect to the fundamental of the filter output currents (i$_{fg1}$, i$_{fg2}$, i$_{fg3}$) and the q-components of the Park-Clarke transformation of the phase connection currents (i$_{fiq}$) are supplied, and on whose output side the q-component of the Park-Clarke transformation of the reference-filter output voltages (u*$_{gq}$) is produced.

9. Apparatus according to Claim 8, **characterized in that** the regulator unit (7) has a first adder (12) for production of the d-component of the Park-Clarke transformation of the reference-phase connection voltages (u*$_{id}$), to which the d-component of the Park-Clarke transformation of the reference-filter output voltages (u*$_{gd}$), the d-component of the filter output voltages (u$_{gd}$) and a d-component of the Park-Clarke transformation of at least one harmonic of the filter output voltages (u*$_{ghd}$) are supplied, and
**in that** the regulator (7) has a second adder (13) for production of the q-component of the Park-Clarke transformation of the reference-phase connection voltages (u*$_{iq}$), to which the q-component of the Park-Clarke transformation of the reference-filter output voltages (u*$_{gq}$), the q-component of the Park-Clarke transformation of the filter output voltages (u$_{gq}$) and a q-component of the Park-Clarke transformation of at least one harmonic of the filter output voltages (u*$_{ghq}$) are supplied.

10. Apparatus according to Claim 9, **characterized in that** the regulator unit (7) has a calculation unit (14) for formation of the reference-phase connection voltages (u*$_{i1}$, u*$_{i2}$, u*$_{i3}$) by inverse Park-Clarke transformation, to whose input side the d-component of the Park-Clarke transformation of the reference-phase connection voltages (u*$_{id}$) and the q-component of the Park-Clarke transformation of the reference-phase connection voltages (u*$_{iq}$) are supplied.

11. Apparatus according to one of Claims 7 to 10, **characterized in that** the regulation device (4) has a second calculation unit (15) for the formation of a d-component of the Park-Clarke transformation of at least one harmonic of the filter output currents (i*$_{fghd}$) with respect to the fundamental of the filter output currents (i$_{fg1}$, i$_{fg2}$, i$_{fg3}$), of a q-component of the Park-Clarke transformation of at least one harmonic of the filter output currents (i*$_{fghq}$) with respect to the fundamental of the filter output currents (i$_{fg1}$, i$_{fg2}$, i$_{fg3}$), of the d-component of the Park-Clarke transformation of the at least one harmonic of the reference-filter output voltages (u*$_{ghd}$) and of the q-component of the Park-Clarke transformation of the at least one harmonic of the reference-filter output voltages (u*$_{ghq}$), with the input side of the second calculation unit (15) being supplied with the d-component of the filter output voltages (u$_{gd}$), with the q-component of the filter output voltages (u$_{gq}$), the phase connection currents (i$_{fi1}$, i$_{fi2}$, i$_{fi3}$), the filter capacitance currents (i$_{Cf1}$, i$_{Cf2}$, i$_{Cf3}$) and the fundamental angle (ωt) of the filter output voltages (u$_{g1}$, u$_{g2}$, u$_{g3}$).

12. Apparatus according to Claim 11, **characterized in that** the regulation device (4) has a third calculation unit (16) for formation of the d-component of the Park-Clarke transformation of the filter output voltages (u$_{gd}$), of the q-component of the Park-Clarke transformation of the filter output voltages (u$_{gq}$) and of the fundamental angle (ωt) of the filter output voltages (u$_{g1}$, u$_{g2}$, u$_{g3}$), with the input side of the third calculation unit (16) being supplied with filter output voltages (u$_{g1}$, u$_{g2}$, u$_{g3}$) of the LCL filters (3).

## Revendications

1. Procédé de mise en fonctionnement d'un circuit convertisseur, dans lequel le circuit convertisseur comporte une unité de convertisseur (1) ayant une pluralité de commutateurs à semi-conducteurs de puissance pouvant être commandés et un filtre LCL (3) raccordé à chaque borne de phase (2) de l'unité de convertisseur (1),
dans lequel les commutateurs à semi-conducteurs de puissance pouvant être commandés sont commandés au moyen d'un signal de commande (S) établi à partir de tensions de référence (u*$_1$, u*$_2$, u*$_3$) dans lequel les tensions de référence (u*$_1$, u*$_2$, u*$_3$) sont établies par soustraction de tensions d'amortissement (u$_{d1}$, u$_{d2}$, u$_{d3}$) à des tensions de raccordement de phase de référence (u*$_{i1}$, u*$_{i2}$, u*$_{i3}$), dans lequel les tensions d'amortissement (u$_{d1}$, u$_{d2}$, u$_{d3}$) sont établies à partir de courants de capacité de filtre (i$_{Cf1}$, i$_{Cf2}$, u$_{Cf3}$) du filtre LCL (3), pondérés par un facteur d'amortissement (K$_f$) réglable,
**caractérisé en ce que** les courants de capacité de filtre (i$_{Cf1}$, i$_{Cf2}$, i$_{Cf3}$) sont filtrés au moyen d'un filtre passe-haut.

2. Procédé selon la revendication 1, **caractérisé en ce que** les tensions de raccordement de phase de référence (u*$_{i1}$, u*$_{i2}$, u*$_{i3}$) sont établies à partir d'une composante d de la transformation de Park-Clarke de courants de raccordement de phase de référence (i*$_{fid}$) générée par régulation d'une tension continue (u$_{dc}$) d'un accumulateur d'énergie capacitif (9) connecté à l'unité de convertisseur (1) à une valeur de référence de tension continue (u*$_{dc}$) et d'une composante q pouvant être prédéfinie de la transformation de Park-Clarke des courants de raccordement de phase de référence ($i*_{fiq}$).

3. Procédé selon la revendication 2, **caractérisé en ce que** la composante d de la transformation de Park-Clarke de tensions de sortie de filtre de référence ($u*_{gd}$) est générée par régulation de la composante d de la transformation de Park-Clarke de courants de raccordement de phase ($i_{fid}$) à une somme constituée de la composante d de la transformation de Park-Clarke des courants de raccordement de phase de référence ($i*_{fid}$) et d'une composante d de la transformation de Park-Clarke d'au moins un harmonique de courants de sortie de filtre ($i*_{fghd}$) par rapport au fondamental de courants de sortie de filtre ($i_{fg1}$, $i_{fg2}$, $i_{fgs}$), et **en ce que** la composante q de la transformation de Park-Clarke des tensions de sortie de référence ($u*_{gq}$) est générée par régulation de la composante q de la transformation de Park-Clarke des courants de raccordement de phase ($i_{fiq}$) à une somme constituée de la composante q de la transformation de Park-Clarke des courants de raccordement de phase de référence ($i*_{fid}$) et d'une composante q de la transformation de Park-Clarke d'au moins un harmonique des courants de sortie de filtre ($i*_{fqhq}$) par rapport au fondamental des courants de sortie de filtre ($i_{fg1}$, $i_{fg2}$, $i_{fg3}$).

4. Procédé selon la revendication 3, **caractérisé en ce que** la composante d de la transformation de Park-Clarke des tensions de raccordement de phase de référence ($u*_{id}$) est générée par une somme constituée de la composante d de la transformation de Park-Clarke des tensions de sortie de filtre de référence ($u*_{gd}$) et de la composante d de tensions de sortie de filtre ($u_{gd}$) et d'une composante d de la transformation de Park-Clarke d'au moins un harmonique des tensions de sortie de filtre ($u*_{ghd}$), et **en ce que** la composante q de la transformation de Park-Clarke des tensions de raccordement de phase de référence ($u*_{iq}$) est générée par une somme constituée de la composante q de la transformation de Park-Clarke des tensions de sortie de filtre de référence ($u*_{gq}$) et de la composante q de la transformation de Park-Clarke des tensions de sortie de filtre ($u_{gq}$) et d'une composante q de la transformation de Park-Clarke d'au moins un harmonique des tensions de sortie de filtre ($u*_{ghq}$).

5. Procédé selon la revendication 4, **caractérisé en ce que** les tensions de raccordement de phase de référence ($u*_{i1}$, $u*_{i2}$, $u*_{i3}$) sont générées par une transformation de Park-Clarke inverse de la composante d de la transformation de Park-Clarke des tensions de raccordement de phase de référence ($u*_{id}$) et de la composante q de la transformation de Park-Clarke des tensions de raccordement de phase de référence ($u*_{iq}$).

6. Dispositif destiné à mettre en oeuvre un procédé de mise en fonctionnement d'un circuit convertisseur, dans lequel le circuit convertisseur comporte une unité de convertisseur (1) ayant une pluralité de commutateurs à semi-conducteurs de puissance pouvant être commandés et un filtre LCL (3) raccordé à chaque borne de phase (2) de l'unité de convertisseur (1), comportant un dispositif de régulation (4) destiné à générer des tensions de référence ($u*_1$, $u*_2$, $u*_3$), qui est connecté par l'intermédiaire d'un circuit de commande (5) destiné à établir un signal de commande (S) à des commutateurs à semi-conducteurs de puissance pouvant être commandés, dans lequel le dispositif de régulation (4) comprend :

   une première unité de calcul (6) destinée à établir des tensions de référence ($u*_1$, $u*_2$, $u*_3$) à partir d'une soustraction de tensions d'amortissement ($u_{d1}$, $u_{d2}$, $u_{d3}$) à des tensions de raccordement de phase de référence ($u*_{i1}$, $u*_{i2}$, $u*_{i3}$), dans lequel des tensions de raccordement de phase de référence ($u*_{i1}$, $u*_{i2}$, $u*_{i3}$) et des courants de capacité de filtre ($i_{Cf1}$, $i_{Cf2}$, $i_{Cf3}$) du filtre LCL (3) destinés à établir les tensions d'amortissement ($u_{d1}$, $u_{d2}$, $u_{d3}$) sont fournis à la première unité de calcul (6), et une unité de régulateur (7), **caractérisé en ce que** les courants de capacité de filtre ($i_{Cf1}$, $i_{Cf2}$, $i_{Cf3}$) sont filtrés au moyen d'un filtre passe-haut.

7. Dispositif selon la revendication 6, **caractérisé en ce que** l'unité de régulateur (7) comporte un premier régulateur proportionnel-intégral (8) auquel sont fournies en entrée une différence constituée de la tension continue ($u_{dc}$) d'un accumulateur d'énergie capacitif (9) connecté à l'unité de convertisseur (1) et d'une valeur de référence de tension continue ($u*_{dc}$) et dans lequel la composante d de la transformation de Park-Clarke de courants de raccordement de phase de référence ($i*_{fid}$) est présente en sortie.

8. Dispositif selon la revendication 7, **caractérisé en ce que** l'unité de régulateur (7) comporte un deuxième régulateur proportionnel-intégral (10) auquel sont fournies en entrée une différence établie à partir de la somme constituée de la composante d de la transformation de Park-Clarke des courants de raccordement de phase de référence ($i*_{fid}$) et d'une composante d de la transformation de Park-Clarke d'au moins un harmonique de courants de sortie de filtre ($i*_{fghd}$) par rapport au fondamental des courants de sortie de filtre ($i_{fg1}$, $i_{fg2}$, $i_{fg3}$) et la composante d de la transformation de Park-Clarke des courants de raccordement de phase ($i_{fid}$) et dans lequel la composante d de la transformation de Park-Clarke de tensions de sortie de filtre de référence ($u*_{gd}$) est présente en sortie, et

**en ce que** l'unité de régulateur (7) comporte un troisième régulateur proportionnel-intégral (11) auquel sont fournies en entrée une différence établie à partir de la somme constituée de la composante q de la transformation de Park-Clarke des courants de raccordement de phase de référence ($i^*_{fiq}$) et d'une composante q de la transformation de Park-Clarke d'au moins un harmonique des courants de sortie de filtre ($i^*_{fqhq}$) par rapport au fondamental des courants de sortie de filtre ($i_{fg1}$, $i_{fg2}$, $i_{fg3}$) et la composante q de la transformation de Park-Clarke des courants de raccordement de phase ($i_{fiq}$) et dans lequel la composante q de la transformation de Park-Clarke des tensions de sortie de filtre de référence ($u^*_{gq}$) est présente en sortie.

9. Dispositif selon la revendication 8, **caractérisé en ce que** l'unité de régulateur (7) comporte un premier sommateur (12) destiné à générer la composante d de la transformation de Park-Clarke des tensions de raccordement de phase de référence ($u^*_{id}$), auquel sont fournies la composante d de la transformation de Park-Clarke des tensions de sortie de filtre de référence ($u^*_{gd}$, la composante d des tensions de sortie de filtre ($u_{gd}$) et une composante d de la transformation de Park-Clarke d'au moins un harmonique des tensions de sortie de filtre ($u^*_{ghd}$), et

**en ce que** l'unité de régulateur (7) comporte un deuxième sommateur (13) destiné à générer la composante q de la transformation de Park-Clarke des tensions de raccordement de phase de référence ($u^*_{iq}$), auquel sont fournies la composante q de la transformation de Park-Clarke des tensions de sortie de filtre de référence ($u^*_{gq}$), la composante q de la transformation de Park-Clarke des tensions de sortie de filtre ($u_{gq}$), et une composante q de la transformation de Park-Clarke d'au moins un harmonique des tensions de sortie de filtre ($u^*_{ghq}$).

10. Dispositif selon la revendication 9, **caractérisé en ce que** l'unité de régulateur (7) comporte une unité de calcul (14) destinée à établir les tensions de raccordement de phase de référence ($u^*_{i1}$, $u^*_{i2}$, $u^*_{i3}$) par une transformation de Park-Clarke inverse, à laquelle sont fournies en entrée la composante d de la transformation de Park-Clarke des tensions de raccordement de phase de référence ($u^*_{id}$) et la composante q de la transformation de Park-Clarke des tensions de raccordement de phase de référence ($u^*_{iq}$).

11. Dispositif selon l'une quelconque des revendications 7 à 10, **caractérisé en ce que** le dispositif de régulation (4) comporte une deuxième unité de calcul (15) destinée à établir une composante d de la transformation de Park-Clarke d'au moins un harmonique des courants de sortie de filtre ($i^*_{fghd}$) par rapport au fondamental des courants de sortie de filtre ($i_{fg1}$, $i_{fg2}$, $i_{fg3}$), une composante q de la transformation de Park-Clarke d'au moins un harmonique des courants de sortie de filtre ($i^*_{fghq}$) par rapport au fondamental des courants de sortie de filtre ($i_{fg1}$, $i_{fg2}$, $i_{fg3}$), la composante d de la transformation de Park-Clarke de l'au moins un harmonique des tensions de sortie de filtre de référence ($u^*_{ghd}$), et la composante q de la transformation de Park-Clarke d'au moins un harmonique des tensions de sortie de filtre de référence ($u^*_{ghq}$), dans lequel la composante d des tensions de sortie de filtre ($u_{gd}$), la composante q des tensions de sortie de filtre ($u_{gq}$), les courants de raccordement de phase ($i_{fi1}$, $i_{fi2}$, $i_{fi3}$), les courants de capacité de filtre $i_{Cf1}$, $i_{Cf2}$, $i_{Cf3}$) et un angle de fondamental ($\omega t$) des tensions de sortie de filtre ($u_{g1}$, $u_{g2}$, $u_{g3}$) sont fournis en entrée à la deuxième unité de calcul (15).

12. Dispositif selon la revendication 11, **caractérisé en ce que** l'unité de régulation (4) comporte une troisième unité de calcul (16) destinée à établir la composante d de la transformation de Park-Clarke des tensions de sortie de filtre ($u_{gd}$), la composante q de la transformation de Park-Clarke des tensions de sortie de filtre ($u_{gq}$) et l'angle de fondamental ($\omega t$) des tensions de sortie de filtre ($u_{g1}$, $u_{g2}$, $u_{g3}$), dans lequel les tensions de sortie de filtre ($u_{g1}$, $u_{g2}$, $u_{g3}$) du filtre LCL (3) sont fournies en entrée à la troisième unité de calcul (16).

Fig. 1

Fig. 2

Fig. 3

Fig. 4

EP 1 842 281 B1

# EP 1 842 281 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010048604 A1